# EUROPÄISCHE PATENTSCHRIFT

(11) **EP 0 875 704 B1**
(45) Veröffentlichungstag und Bekanntmachung des Hinweises auf die Patenterteilung: **04.06.2003**
(21) Anmeldenummer: 98111433.3
(22) Anmeldetag: 24.01.1996
(51) Int. Cl.: F16K 31/64, G05D 23/13

(54) **Sanitäre Mischbatterie mit Thermostateinrichtung**
Sanitary Mixer Tap with a Thermostatic Device
Mitigeur sanitaire à dispositif à thermostat

(30) Priorität: 25.01.1995 DE 19502147
(43) Veröffentlichungstag der Anmeldung: 04.11.1998
(62) Teilanmeldung aus: 96901759.9
(73) Patentinhaber: Ideal-Standard GmbH & Co. OHG, 53121 Bonn (DE)
(72) Erfinder: Ems, Josef, 54516 Wittlich (DE)
(74) Vertreter: Gesthuysen, von Rohr & Eggert

(56) Entgegenhaltungen:
- CH-A- 643 928
- DE-A- 3 300 600
- US-A- 3 765 604

## Beschreibung

Die Erfindung betrifft eine sanitäre Mischbatterie mit Thermostateinrichtung, gemäß Oberbegriff des Anspruchs 1, wie sie aus US-A-3 765 604 bekannt ist.

Weitere sanitäre Mischbatterien sind bereits auch aus Praxis bekannt. Insbesondere bei einer wandeingebauten Mischbatterie mit Thermostateinrichtung ist es so, daß ein--Ventilsitz für die eine Steuerkante des Regelkörpers an einem in die Wand eingebauten-Gehäuse vorgesehen bzw. Teil des Gehäuses ist. Probleme ergeben sich immer dann, wenn der Ventilsitz beschädigt ist und erneuert werden muß.

Die Erfindung geht nun einen neuen Weg und sieht zur Vermeidung der Nachteile des Standes der Technik eine Mischbatterie mit Thermostateinrichtung gemäß den Merkmalen des Anspruchs 1 vor Somit befindet sich der beim Stand der Technik fest im Gehäuse vorgesehene Ventilsitz nun an einem separat handhabbaren, auswechselbaren Bauteil, das problemlos aus- und auch eingebaut werden kann.

Es ist somit vorgeschen daß die Hülse, das Druckfederelement und das Druckstück als zusammen handhabbare Baueinheit ausgebildet sind und somit die Rückstelleinrichtung bilden. Zur Herstellung der als Baueinheit ausgebildeten Rückstelleinrichtung aus der zuvor genannten Hülse, dem Druckfederelement und dem Druckstück ist weiterhin das Druckstück mit der Hülse verrastet. Dabei kann das weitere Druckstück zweckmäßigerweise aus Kunststoff, insbesondere aus POM, bestehen.

Die Hülse ist vorzugsweise mit einem Außengewinde versehen, so daß sie insbesondere bei einer wandeingebauten Mischbatterie mit Thermostateinrichtung in einfacher Weise in ein Wandeinbaugehäuse eingeschraubt und auch wieder gelöst werden kann. Weiterhin sollte gleich an der Hülse, nämlich im hinteren Bereich, eine Dichtung gelagert sein, so daß auftretende Abdichtungsprobleme in einfacher Weise dadurch gelöst werden können, daß die Baueinheit insgesamt, also mit Dichtung, ausgewechselt wird.

Im folgenden wird die Erfindung anhand von Ausführungsbeispielen beschrieben. Es zeigt
- Fig. 1: eine Querschnittansicht einer Mischbatterie mit Thermostateinrichtung,
- Fig. 2: eine Querschnittansicht einer Thermostatkartusche für eine Mischbatterie,
- Fig. 3: eine Querschnittansicht einer Thermostatkartusche mit Verstelleinheit einer Temperaturverstelleinrichtung sowie zugeordneter Rückstelleinrichtung.
- Fig. 4: eine Querschnittansicht einer Verstelleinheit,
- Fig. 5: eine Draufsicht auf einen Riegel der Verstelleinheit und
- Fig. 6: eine Draufsicht auf einen weiteren Riegel der Verstelleinheit.

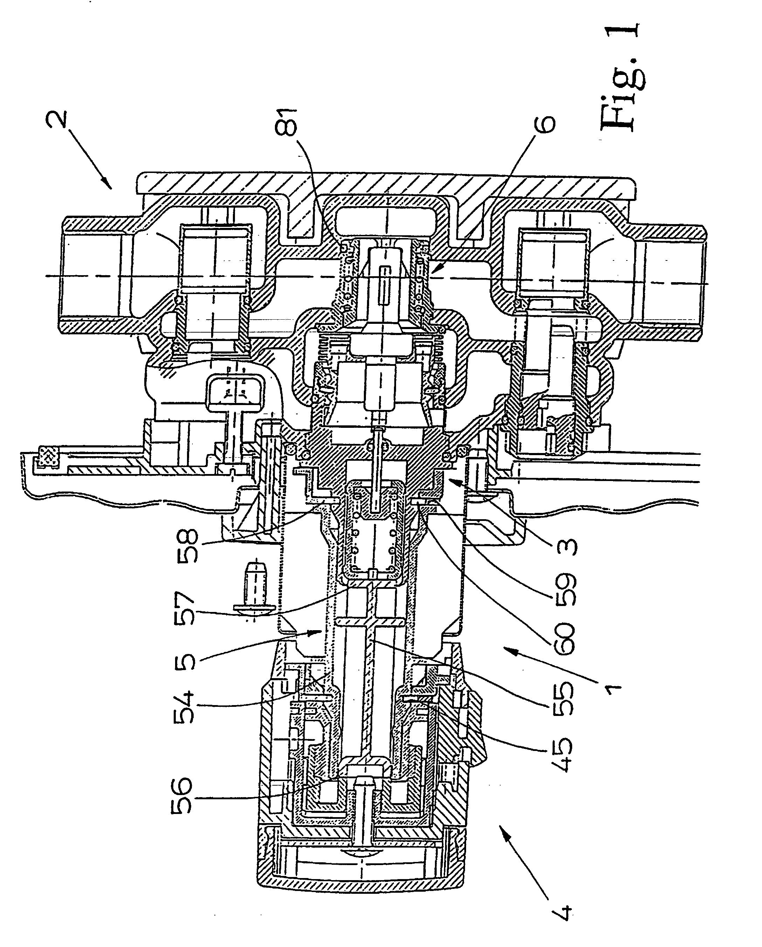

In Fig. 1 ist eine sanitäre Mischbatterie 1 mit Thermostateinrichtung dargestellt, die in ein Wandeinbaugehäuse 2 eingeschraubt ist. Die sanitäre Mischbatterie 1 weist eine Thermostatkartusche 3, eine Temperaturverstelleinrichtung 4, eine Verlängerungseinrichtung 5 und eine Rückstelleinrichtung 6 auf.

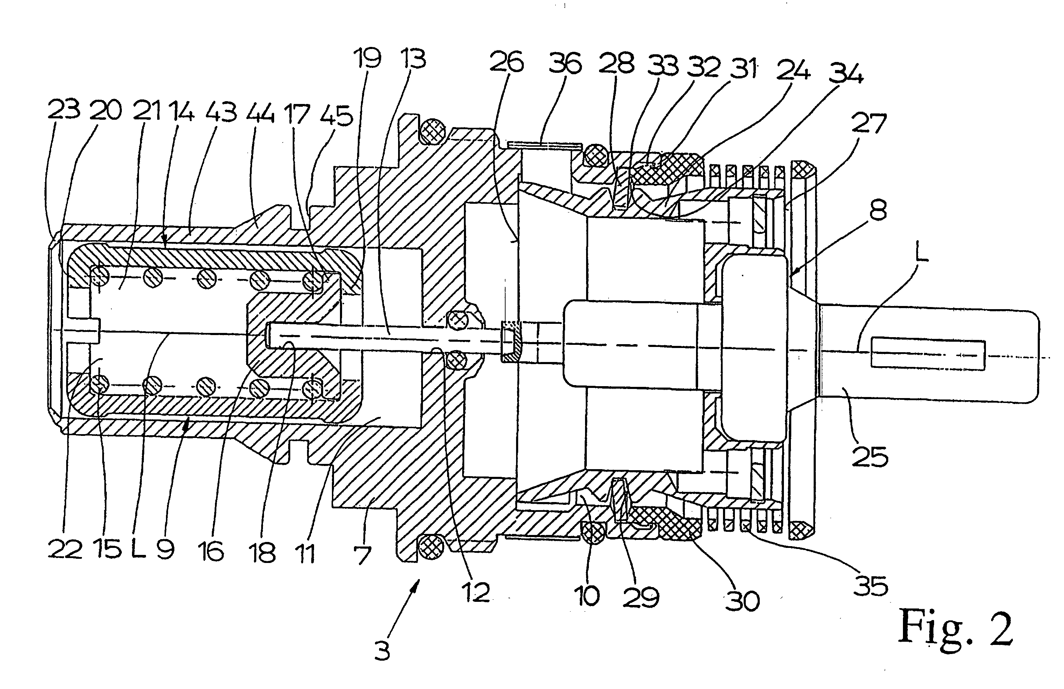

In Fig. 2 ist die Thermostatkartusche 3 näher dargestellt. Die Thermostatkartusche 3 weist ein Kartuschengehäuse 7 auf, in dem einerseits ein Regelkörper 8, andererseits eine Überhubeinheit 9 aufgenommen ist. Hierzu weist das Kartuschengehäuse 7 eine erste größere, nach außen offene Kammer 10 für den Regelkörper 8 und eine kleinere zweite Kammer 11 für die Überhubeinheit 9 auf. Die Kammern 10, 11 sind über eine abgedichtete Öffnung 12 miteinander verbunden, in der ein Druckstab 13 gelagert ist.

Der Druckstab 13 steht sowohl mit dem Regelkörper 8 als auch mit der Überhubeinheit 9 in Verbindung.

Die Überhubeinheit 9 weist einen Hülsenkörper 14, ein Druckfederelement 15 und ein Druckstück 16 auf. Das Druckfederelement 15, bei dem es sich um eine Schraubenfeder handelt, ist zusammen mit dem Druckstück 16 innerhalb des Hülsenkörpers 14 angeordnet. Die Anordnung ist dabei derart, daß das Druckfederelement 15 gegen das Druckstück 16 wirkt. Hierzu weist das Druckstück 16 einen umlaufenden Rand 17 auf, auf dem das Druckfederelement 15 aufliegt. Das Druckstück 16, das grundsätzlich als Platte ausgebildet sein könnte, hat eine äußere Zapfenform und nimmt den Druckstab 13 auf. Hierzu ist eine entsprechende Aufnahme 18 im Druckstück 16 vorgesehen. An seinen beiden Enden weist der Hülsenkörper 14 jeweils einen Anschlag 19, 20 als umlaufenden Anschlagbund auf. Dabei dient der eine Anschlag 19 als Widerlager für das Druckstück 16, der andere Anschlag 20 als Widerlager für das Druckfederelement 15.

Wesentlich ist nun, daß der Hülsenkörper 14 im unmontierten Zustand, wenn er sich also nicht in der Kammer 11 befindet, aufklappbar ist. "Aufklappbar" bedeutet in diesem Zusammenhang, daß das Druckfederelement 15 und auch das Druckstück 16 etwa quer zur Längsachse der Überhubeinheit 9 in den Hülsenkörper 14 einlegbar sind. Wesentlich ist weiterhin, daß bereits im unmontierten Zustand und auch bereits im Ursprungszustand die beiden Anschläge 19, 20 vorhanden sind, so daß die beiden beim Stand der Technik notwendigen Arbeitsvorgängedes Umbördelns des Hülsenkörpers 14 an seinen beiden Enden nicht mehr erforderlich sind.

Der Hülsenkörper 14 besteht im dargestellten Ausführungsbeispiel aus zwei baugleichen Schalen 21, 22. Da die Schalen 21, 22 nicht nur baugleich sind, sondern zwei voneinander separate Bauteile darstellen, bedeutet der zuvor erwähnte Ausdruck "aufklappbar" auch, daß die eine Schale von der anderen abnehmbar ist, so daß der durch die Anschläge 19, 20 begrenzte Innenraum des Hülsenkörpers 14 zum Einsetzen des Druckfederelements 15 und des Druckstücks 16 frei zugänglich ist. Das Druckstück 16 und die Schalen 21, 22 bestehen aus Kunststoff, insbesondere aus POM.

Nach dem Zusammensetzen der Überhubeinheit 9 und dem Einschieben in die Kammer 11 wird die vordere umlaufende Stirnkante 23 an der Kammer 11 soweit nach innen hin umgebördelt, daß die Überhubeinheit 9 in der Kammer 11 gesichert ist und nicht herausgedrückt werden kann.

Der bereits zuvor erwähnte Regelkörper 8 weist eine Regelhülse 24 und ein Dehnstoffelement 25 auf, wobei das Dehnstoffelement 25 an der. Regelhülse 24 befestigt ist. Die Regelhülse 24 selbst weist an ihren Enden jeweils eine Steuerkante 26, 27 zur Regelung des Durchflusses von Kalt- und Warmwasser auf. Auf der Außenseite der Regelhülse 24 des Regelkörpers 8 befindet sich eine umlaufende Membrandichtung 28. Die Membrandichtung 28 ist in einer V-förmigen Nut 29 der Regelhülse 24 angeordnet und trennt den Warmwasserbereich vom Kaltwasserbereich.

Wesentlich ist nun, daß ein mit dem Kartuschengehäuse 7 verrastbarer Schnappring 30 vorgesehen ist, der zum Halten des Regelkörpers 8 im Kartuschengehäuse 7, d. h. in der Kammer 10 dient. Zu diesem Zweck weist das Kartuschengehäuse 7 öffnungsseitig in der Kammer 10 einen vorzugsweise umlaufenden, nach innen hin überstehenden Rand 31 auf, während am Schnappring 30 wenigstens ein Rastvorsprung 32 mit üblicher Auflaufschräge vorgesehen ist. Die Rastverbindung zwischen dem Kartuschengehäuse 7 und dem Schnappring 30 ist dabei derart, daß nach dem Aufrasten des Schnapprings 30 dieser im wesentlichen spielfrei am Kartuschengehäuse 7 gehalten, d. h. in Richtung der Längsachse L an sich nicht verschiebbar ist. Dabei liegt der Schnappring 30 im aufgerasteten Zustand an der Membrandichtung 28 unter Bildung eines Dichtungsanschlages unmittelbar an. Der Schnappring 30 sorgt also nicht nur dafür, daß das Kartuschengehäuse 7 und der Regelkörper 8 eine gemeinsam handhabbare Baueinheit bilden, sondern er dient auch zur Realisierung der Dichtung zwischen diesen beiden Bauteilen. Um die Bewegung der Membrandichtung 28 nicht einzuschränken und um eine weitere V-förmige Nut für die Membrandichtung 28 zur Verfügung zu stellen, weist die vordere, der Membrandichtung 28 zugewandte Stirnkante 33 eine Abschrägung 34 auf.

Weiterhin ist mit dem Schnappring 30 ein ringförmiges Sieb 35 verbunden, das sich bis über die Steuerkante 27 der Steuerhülse 24 hinaus erstreckt. Im übrigen ist aber auch der Steuerkante 26 ein Sieb 36 vorgeschaltet, das mit dem Kartuschengehäuse 7 verbunden ist. Im Gegensatz zum Sieb 36 ist das Sieb 35 einteilig mit dem Schnappring 30 ausgebildet. Die gesamte Baueinheit aus Schnappring 30 und Sieb 35 besteht aus Kunststoff, insbesondere aus POM.

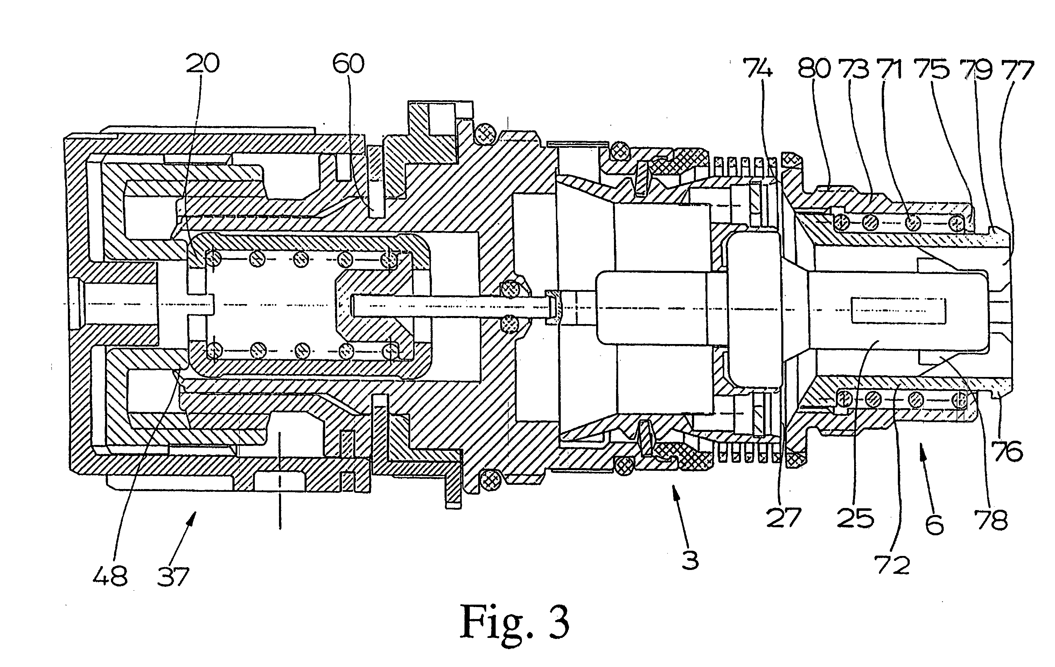

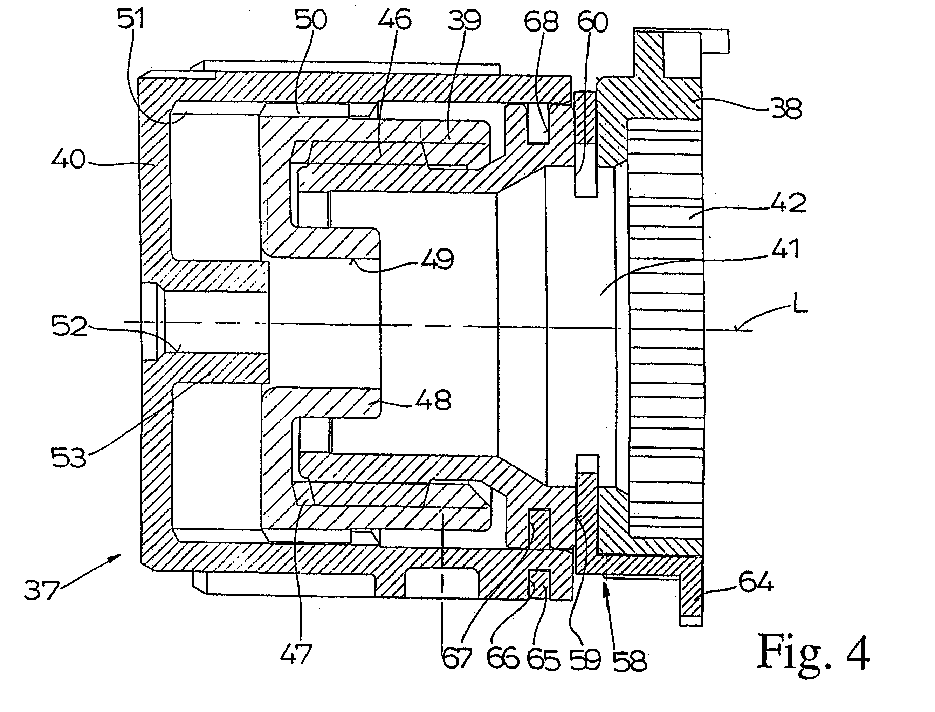

In Fig. 3 ist nun die in Fig. 2 dargestellte Thermostatkartusche 3 zusammen mit einer Verstelleinheit 37 der Temperaturverstelleinrichtung 4 sowie einer Rückstelleinrichtung 6 dargestellt. Die Einzelheiten der Verstelleinheit 37 gehen insbesondere aus Fig. 4 gut hervor. Die Verstelleinheit 37 weist ein Aufsetzelement 38, ein Schraubelement 39 und ein Drehelement 40 auf. Das Aufsetzelement 38 ist derart ausgebildet. daß es im zusammengesetzten Zustand verdrehsicher und auch abziehsicher auf das Kartuschengehäuse 7 oder die Verlängerungseinrichtung 5 aufsetzbar ist. Hierzu sind im unteren Innenbereich 41 des Aufsetzelementes 38 Fixiermittel 42 vorgesehen, die mit entsprechenden. nicht dargestellten Fixiermitteln am Kartuschengehäuse 7 korrespondieren. Im dargestellten Ausführungsbeispiel handelt es sich bei den Fixiermitteln am Aufsetzelement 38 um etwa sägezahnartig ausgebildete Vorsprünge. Der Innenbereich 41 selbst ist etwa der Form des Bereiches des Kartuschengehäuses 7 angepaßt, auf den das Aufsetzelement 38 aufgesetzt wird. Hierzu ist am Kartuschengehäuse 7 ein Hals 43 vorgesehen, der einen umlaufenden Konus 44 aufweist. Im Anschluß an den Konus 44 ist eine umlaufende Nut 45 vorgesehen.

An seinem oberen, dem Kartuschengehäuse 7 abgewandten Ende weist das Aufsetzelement 38 ein Außengewinde 46 auf, das mit einem Innengewinde 47 im Schraubelement 39 korrespondiert. Weiterhin weist das Schraubelement 39 eine mit einem umlaufenden, nach innen vorstehenden Rand 48 versehene zentrale Öffnung 49 auf. Darüber hinaus sind außenseitig am Schraubelement 39 langgestreckte und etwa in Richtung der Längsachse L der Verstelleinheit 37 ausgerichtete Führungsvorsprünge 50 vorgesehen, die mit entsprechenden Führungsvorsprüngen 51 auf der Innenseite des Drehelements 40 korrespondieren. Auch das Drehelement 40 ist mit einem eine zentrale Öffnung 52 aufweisenden Rand 53 versehen, der nach innen vorsteht und bis in die Öffnung 49 hinein ragen kann. Dies bedeutet, daß die Außenmaße des Randes 53 geringfügig kleiner sind als die Innenmaße der Öffnung 49.

Wesentlich ist nun. daß die Verstelleinheit 37 vorzugsweise als Baueinheit auf das Kartuschengehäuse 7 oder ein Verlängerungsgehäuse 54 der Verlängerungseinrichtung 5 aufrastbar ist. Wird ein Verlängerungsgehäuse 54 verwendet, wie dies in Fig. 1 dargestellt ist, versteht es sich, daß das Verlängerungsgehäuse 54 an seinem dem Kartuschengehäuse 7 abgewandten Ende der äußeren Form des entsprechenden Endes des Kartuschengehäuses 7 entspricht.

Das gleiche Verriegelungsprinzip ist auch bei der Verbindung der Verlängerungseinrichtung 5 mit dem Kartuschengehäuse 7 gegeben. Dies ist in Fig. I dargestellt.

Die Verlängerungseinrichtung 5 selbst besteht, wie sich aus Fig. 1 ergibt, an sich lediglich aus dem Verlängerungsgehäuse 54 und einem darin angeordneten, verschieblichen Übertragungselement 55, das die Verstelleinheit 37 mit der Überhubeinheit 9 verbindet. Hierzu ist am Übertragungselement 55 ein erster Rand 56 vorgesehen, der mit dem Rand 48 des Schraubelements 39 in Verbindung steht, während der andere Rand 57 mit dem Anschlag 20 in Verbindung steht. Auf diese Weise kann eine Drehbewegung des Drehelements 40 über das Schraubelement 39, das Übertragungselement 55, die Überhubeinheit 9, den Druckstab 13 auf das Regelelement 8 zur Temperatureinstellung übertragen werden.

Zur Klarstellung sei darauf hingewiesen, daß bei der in Fig. 3 dargestellten Ausführungsform der Rand 48 unmittelbar mit dem Anschlag 20 in Verbindung steht, also eine Verlängerungseinrichtung 5 nicht vorgesehen ist.

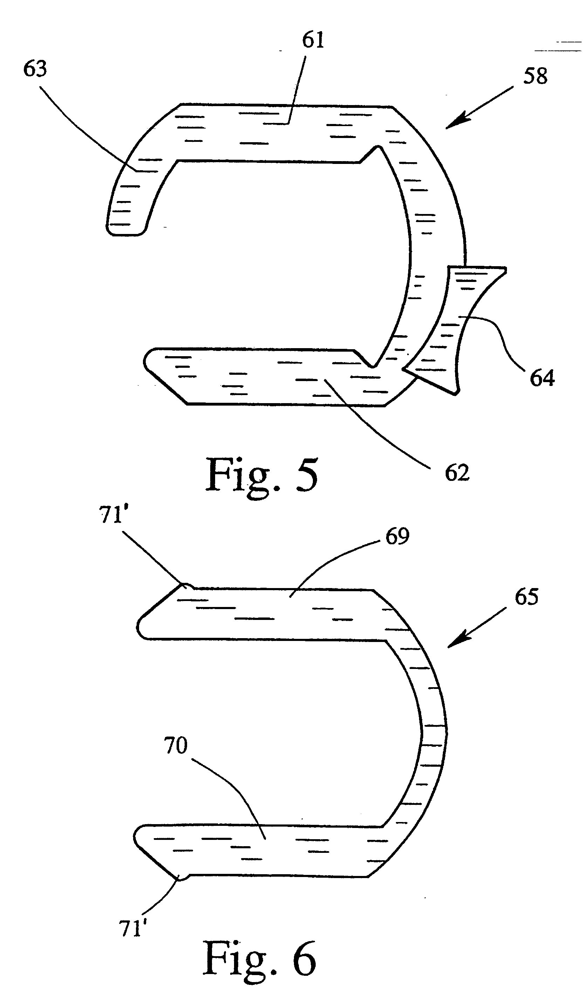

Unabhängig davon, ob die Verstelleinheit 37 nun auf das Kartuschengehäuse 7 selbst oder auf das Verlängerungsgehäuse 54 und ob darüber hinaus das Verlängerungsgehäuse 54 auf das Kartuschengehäuse 7 aufrastbar ist, ist bei beiden Ausführungsformen vorgesehen, daß die Verrastung und damit die lösbare Befestigung mittels eines separaten Riegels 58 bewirkt wird, der in Fig. 5 näher dargestellt ist. Das Vorsehen eines separaten Riegels 58 hat den Vorteil, daß die Verrastung in besonders einfacher Weise wieder gelöst werden kann, was nicht, jedenfalls nicht ohne die Gefahr, daß Rastelemente beschädigt werden, möglich ist, wenn die die Verrastung bewirkenden Elemente von außen nicht zugänglich bzw. lösbar sind.

Im Aufsetzelement 38 bzw. im Verlängerungsgehäuse 54 befindet sich eine schlitzförmige Aufnahme 59 für den Riegel 58. Um die Rast- und Riegelwirkung entfalten zu können, weist die Aufnahme 59 dabei vorliegend zwei auf gegenüberliegenden Seiten vorgesehene Durchbrechungen 60 auf, die sich bis in den Innenbereich 41 des Aufsetzelements 38 bzw. des Verlängerungsgehäuses 54 hinein erstrecken. Durch die Durchbrechungen 60 ragt jeweils ein Abschnitt des Riegels 58, um mit der Nut 45 im Kartuschengehäuse 7 bzw. im Verlängerungsgehäuse 54 zusammenzuwirken. Der Riegel 58 selbst ist U-förmig ausgebildet und weist zwei einander gegenüberliegende Rastschenkel 61, 62 auf. An den einen Rastschenkel 61 schließt sich ein Fixierabschnitt 63 an, der zum lösbaren Halten des Riegels 58 an dem Aufsetzelement 38 bzw. dem Verlängerungsgehäuse 54 dient. Weiterhin weist der Riegel 58 einen Griffabschnitt 64 auf, der zum leichten Abziehen des Riegels 58 dient. Der Riegel 58 besteht im übrigen aus Kunststoff, insbesondere aus POM.

Damit die-Verstelleinheit 37 als Baueinheit handhabbar ist, ist-das-Drehelement 40 über einen weiteren separaten Riegel 65 drehbar an dem Aufsetzelement 38 gesichert. Der Riegel 65 sichert dabei nicht nur das Drehelement 40 auf dem Aufsetzelement 38, sondern begrenzt auch die Bewegung des Schraubelementes 39 innerhalb des Drehelementes 40. Wäre der weitere Riegel 65 nicht vorhanden, so könnte das Drehelement 40 vom Aufsetzelement 38 abgeschraubt werden.

Wie sich insbesondere aus Fig. 4 ergibt, ist im Drehelement 40 eine schlitzförmige Aufnahme 66 für den weiteren Riegel 65 vorgesehen, wobei die Aufnahme 66 zwei sich bis in den Innenbereich des Drehelementes 40 hinein öffnende Durchbrechungen 67 aufweist, durch die ein Abschnitt des weiteren Riegels 65 im eingesetzten Zustand in den Innenbereich hineinragt. Diese in den Innenbereich hineinragenden Abschnitte des weiteren Riegels 65 wirken mit einer korrespondierenden umlaufenden Nut 68 am Aufsetzelement 38 zusammen.

Wie sich insbesondere aus Fig. 6 ergibt, ist der weitere Riegel 65 ebenfalls U-förmig ausgebildet; er weist also zwei Schenkel 69, 70 auf. An jedem der beiden Schenkel 69, 70 weist der Riegel 65 nach außen hin weisend einen Fixierabschnitt 71' auf. Die Fixierabschnitte 71' dienen zum lösbaren Halten des weiteren Riegels 65 am Drehelement 40 bzw. in der Aufnahme 66.

In Fig. 3 ist, wie bereits erwähnt, die Rückstelleinrichtung 6 näher dargestellt, während sie in Fig. 1 im eingebauten Zustand der Mischbatterie 1 ersichtlich ist. Die Rückstelleinrichtung 6, die in den Fig. 1 und 3 in vorgespannter Stellung dargestellt ist. weist ein weiteres Druckfederelement 71 auf, bei dem es sich um eine Schraubendruckfeder handelt, und ein weiteres Druckstück 72. Das weitere Druckstück 72 dient zum Zusammenwirken mit dem Dehnstoffelement 25 des Regelkörpers 8.

Wesentlich ist nun hierbei. daß eine das weitere Druckfederelement 71 und das weitere Druckstück 72 aufnehmende Hülse 73 als separates Bauteil vorgesehen ist. Die vordere Stirnkante 74 der Hülse 73 ist dabei als Ventilsitz der Steuerkante 27 der Steuerhülse 24 ausgebildet. Insgesamt sind die Hülse 73, das weitere Druckfederelement 71 und das weitere Druckstück 72 als Baueinheit ausgebildet, also gemeinsam handhabbar. Hierzu ist das weitere Druckstück 72 mit der Hülse 73 verrastet. Die Anordnung des weiteren Druckfederelements 71 und des weiteren Druckstückes 72 in der Hülse 73 ist derart, däß die Hülse 73 an ihrem dem Regelkörper 8 abgewandten Ende einen vorzugsweise umlaufenden, nach innen hin gerichteten Anschlag 75 aufweist. Innenseitig liegt gegen den Anschlag 75 das weitere Druckfederelement 71 an. Das weitere Druckstück 72 ist durch das weitere Druckfederelement 71 hindurchgeschoben und hinter dem Anschlag 75 verrastet. Zur Verrastung ist dabei außenseitig am weiteren Druckstück 72 wenigstens ein Rastvorsprung 76 vorgesehen.

Das weitere Druckstück 72 hat ebenfalls eine an sich hülsenartige Form und bildet endseitig einen Anschlag 77 für das Dehnstoffelement 25. Im dargestellten Ausführungsbeispiel ist der den Anschlag 77 bildende Bereich von insgesamt vier, über jeweils einen Schlitz 78 voneinander beabstandeten Armen 79 gebildet. Das weitere Druckstück 72 besteht vorzugsweise aus Kunststoff, insbesondere aus POM.

Auf der Außenseite weist die Hülse 73 ein Außengewinde 80 auf, das mit einem entsprechenden Innengewinde im Wandeinbaugehäuse 2 korrespondiert. Weiterhin ist im hinteren Bereich der Hülse 73 eine Dichtung 81 gelagert.

Die in Fig. 1 dargestellte sanitäre Mischbatterie 1 mit Thermostateinrichtung ist in einfacher Weise zu montieren. Zunächst wird die Rückstelleinrichtung 6 in das Wandeinbaugehäuse 2 eingeschraubt. Anschließend wird die Thermostatkartusche 3 mit dem über den Schnappring 30 fixierten Regelkörper 8 in das Wandeinbaugehäuse 2 eingeschraubt. Sodann kann die Verlängerungseinrichtung 5 auf den Hals 43 des Kartuschengehäuses 7 aufgeschoben werden, wobei der Riegel 58 nach der Bewegung über den Konus 44 in der Nut 45 einrastet. Anschließend kann in gleicher Weise die Verstelleinheit 37 auf den Hals des Verlängerungsgehäuses 45 aufgeschoben werden, bis der Riegel 58 einrastet.

## Patentansprüche

1. Sanitäre -Mischbatterie (1) mit Thermostateinrichtung, mit einer wenigstens ein Druckfederelement (71) und ein Druckstück (72) aufweisenden Rückstelleinrichtung (6), wobei das Druckstück (72) zum Zusammenwirken mit einem Dehnstoffelement (25) des Regelkörpers (8) der Mischbatterie (1) unter Vorspannung des Druckfederelements (71) dient, eine das Druckfederelement (71) und das Druckstück (72) aufnehmende Hülse (73) als separates Bauteil vorgesehen ist, die vordere Stirnkante (74) der Hülse (73) als Ventilsitz der einen Steuerkante (27) des Regelkörpers (8) ausgebildet ist, die Hülse (73) an ihrem dem Regelkörper (8) abgewandten Ende einen umlaufenden, nach innen gerichteten Anschlag (75) aufweist, das Druckfederelement (71) innenseitig gegen den Anschlag (75) anliegt und das Druckstück (72) durch das Druckfederelement (71) hindurchgeschoben ist, **dadurch gekennzeichnet, daß** die Hülse (73), das Druckfederelement (71) und das Druckstück (72) insgesamt als separat handhabbare Baueinheit ausgebildet sind, indem das Druckstück (72) hinter dem Anschlag (75) mittels eines außenseitig am Druckstück (72) vorgesehenen Rastvorsprungs (76) mit der Hülse (73) verrastet ist.

2. Mischbatterie nach Anspruch 1, **dadurch gekennzeichnet, daß** das Druckstück (72) aus Kunststoff, insbesondere aus POM, besteht.

3. Mischbatterie nach Anspruch 1 oder 2, **dadurch gekennzeichnet, daß** die Hülse (73) ein Außengewinde (80) aufweist und daß an der Hülse (73) vorzugsweise eine Dichtung (81) gelagert ist, vorzugsweise im hinteren Bereich.

## Claims

1. A sanitary combination set (1) with thermostat device, with a restoring element (6) having at least one compression spring element (71) and a clamping member (72), wherein the clamping member (72) is used to interact with an expansion material element (25) of the control element (8) of the combination set (1) under a prestressing of the compression spring element (71), a sleeve (73) that incorporates the compression spring element (71) and clamping member (72) is provided as a separate component, the front entering edge (74) of the sleeve (73) is designed as a valve seat for the one control edge (27) of the control element (8), the end of the sleeve (73) facing away from the control element (8) has a continuous, inwardly oriented stop (75), the compression spring element (71) abuts the stop (75) on the inside, and the clamping member (72) is pressed through the compression spring element (71), **characterized in that** the sleeve (73), compression spring element (71) and clamping member (72) are together designed as a separately operable component by latching the clamping member (72) with the sleeve (73) in back of the stop (75) by means of a latching projection (76) provided on the outside of the clamping member (72).

2. The combination set according to claim 1, **characterized in that** the clamping member (72) is made out of plastic, in particular POM.

3. The combination set according to claim 1 or 2, **characterized in that** the sleeve (73) has an outside thread (80), and that a packing (81) is mounted on the sleeve (73), preferably in the rear area.

## Revendications

1. Mitigeur sanitaire (1) avec installation thermostatique, avec une unité de rappel (6) possédant au moins un élément de ressort à pression (71) et un élément à pression (72), l'élément à pression (72) servant à l'action combinée avec un élément extensible (25) du corps de regulation (8) du mitigeur (1) sous précontrainte de l'élément de ressort à pression (71), un manchon (73) incluant un élément de ressort à pression (71) et un élément à pression (72) prévu comme composant séparé, le bord d'attaque (74) du boîtier (73) formé comme emplacement de valve dudit bord d'attaque (27) du corps de régulation (8), le manchon (73) possédant une butée (75) circulaire tournée vers l'intérieur à son extrémité opposée au corps de régulation (8), l'élément de ressort à pression (71) reposant sur la face intérieure contre la butée (75) et l'élément à pression (72) étant inséré à travers l'élément de ressort à pression (71), **caractérisé en ce que** le boîtier (73), l'élément de ressort à pression (71) et l'élément à pression (72) sont réalisés globalement comme une unité de construction séparée manipulable, tandis que l'élément à pression (72), derrière la butée (75), au moyen d'une clavette d'enclenchement (76) prévue à l'extérieur de l'élément à pression (72) est enclenché sur le boîtier (73).

2. Mitigeur selon la revendication 1, **caractérisé en ce que** l'élément à pression (72) est fabriqué en matériau synthétique, particulièrement en POM.

3. Mitigeur selon la revendication 1 ou 2, **caractérisé en ce que** le boîtier (73) possède un filetage (80) extérieur et qu'un joint (81) est Logé de préférence au niveau du boîtier (73), de préférence dans la zone arrière.
